# EUROPÄISCHE PATENTANMELDUNG

(11) **EP 0 903 536 A1**
(43) Veröffentlichungstag der Anmeldung: **24.03.1999**
(21) Anmeldenummer: 97810699.5
(22) Anmeldetag: 23.09.1997
(51) Int. Cl.: F22B 37/00, F23J 15/00, B01D 45/06

(54) **Dampferzeuger mit integriertem Staubabscheider**

(71) Anmelder: Asea Brown Boveri AG, 5401 Baden (CH)
(72) Erfinder: Riccius, Oliver, 5400 Baden (CH); Ziegler, Georg, 8404 Winterthur (CH)
(74) Vertreter: Pöpper, Evamaria, Dr.

(57) **Zusammenfassung**

Die Erfindung betrifft einen Dampferzeuger, welcher aus einer Brennkammer (1), einem Strahlungsteil (2) und einem Konvektionsteil (3) besteht, und welcher mindestens zwei sich an die Brennkammer (1) anschliessende vertikale Gaszüge (4, 5) mit jeweils 180 ° Umlenkung für das Rauchgas (12) aufweist, wobei die Brennkammer (1) und der Gaszug (4) mittels einer ersten Trennwand (14) und die beiden Gaszüge (4, 5) mittels einer zweiten Trennwand (6) voneinander getrennt sind. Sie ist dadurch gekennzeichnet, dass die zweite Trennwand (6) an ihrem unteren Ende derart ausgebildet ist, dass die Durchtrittsfläche für das Rauchgas (12) vom vertikalen Zug (4) mit Abwärtsströmung zum vertikalen Zug (5) mit Aufwärtsströmung über die Breite einen veränderlichen Wert aufweist, wobei die Durchtrittsfläche in der Mitte kleiner ist als aussen. Dadurch wird die bei der Umlenkung entstehende Sekundärströmung verstärkt, wobei deren Wirbel im Wandbereich entgegengesetzt zur Richtung der Hauptströmungsumlenkung drehen. Auf diese Weise wird der Staubaustrag erheblich verbessert.

## Beschreibung

### Technisches Gebiet

Die Erfindung betrifft einen Dampferzeuger mit integriertem Staubabscheider, wobei der Dampferzeuger aus einer Brennkammer, einem Strahlungsteil und einem Konvektionsteil besteht und mindestens zwei sich an die Brennkammer anschliessende vertikale Gaszüge mit jeweils 180° Gasumlenkung aufweist.

### Stand der Technik

Zur Zeit werden als Kessel für Kehrichtverbrennungsanlagen (KVA) in mitteleuropäischen Ländern bevorzugt Kessel verwendet, bei denen das aus der Brennkammer strömende Gas über einen ersten Leerzug mit Abwärtsströmung in einen zweiten Leerzug mit Aufwärtströmung und anschliessend in einen horizontalen Bündelzug strömt. Neben diesen horizontalen Dampferzeugern sind auch vertikale Dampferzeuger für Kehrichtverbrennungsanlagen bekannt, welche meist in 3- oder 4-Zugbauweise ausgeführt sind (K. J. Thomé-Kozmiensky: Thermische Abfallbehandlung. EF-Verlag für Energie- und Umwelttechnik GmbH, 1994, S. 390 bis 402). Auch bei der Verbrennung von Feststoffen, wie Holz und Biomasse, kommen häufig Rostfeuerungen mit angeschlossenen Mehrzugkessel zum Einsatz. In den Lehrzügen wird unter anderem Flugasche abgeschieden und abgeführt. Flugasche ist besonders in der Kehrichtverbrennung ein Problemstoff, weil Flugasche stark kontaminiert ist und als Sondermüll entsorgt werden muss.

Bisher sind die Lehrzüge der Dampferzeuger vorwiegend als rechteckige Kanäle ausgeführt, wobei ihre Längsschnitte weitgehend identisch sind.

Während man bisher lediglich Wert auf eine betriebssichere Abführung des Staubes, der durch Abreinigung oder durch Abplatzen von den Wänden fällt, gelegt hat, ist mittlerweile die Staubmenge am Kesselende ein Qualitätsmerkmal für die Verbrennung und den Kessel und muss dem Kunden gegenüber garantiert werden.

Aus der Brennkammer wird bei den oben beschriebenen Feuerungen relativ viel Staub (2-5 g/Nm³) mitgerissen. Dieser hohe Staubanteil ist unerwünscht, denn er verursacht folgende Probleme:
- Der Staub lagert sich an den Heizflächen an, so dass diese entsprechend überdimensioniert werden müssen. Ausserdem müssen sie so gebaut werden, dass sie durch Klopfen oder Russblasen gereinigt werden können.
- In der dem Kessel nachgeschalteten Gasreinigungsanlage müssen für die Entstaubung teure Elektro-Filter und Wäscher eingesetzt werden.
- Im horizontalen Teil des Kessels begünstigt der abgelagerte Staub katalytisch die Bildung von Dioxin. Diese Reaktion (Denovo-Synthese) läuft ab, wenn Gas mit Sauerstoff und Chloranteilen bei einer Temperatur zwischen 250 und 500°C und einer Verweilzeit von mehreren Sekunden mit einem Katalysator (im vorliegenden Falle wirkt der Staub als Katalysator) in Berührung kommt. Rauchgas und Staub, die nach der Verbrennung praktisch dioxinfrei vorliegen, werden durch diese Denovo-Synthese unterhalb von 500°C wieder dioxinhaltig.
- Die Deponie von dioxinhaltigem Staub ist ein teures Umweltproblem.
- Die Reinigung der dioxinhaltigen Abgase ist sehr aufwendig.
In neueren Ausschreibungen wird ein Staubgehalt der Rohgase von 1-2 g/Nm³ gefordert, der mit feuerungstechnischen Massnahmen allein nicht mehr einzuhalten ist. Für eine "high dust-SCR (Selective Catalytic Reduction)"-Anlage (NOx-Katalysatoren sind vor der Rauchgasreinigung und vor dem Elektrofilter angeordnet) wird sogar ein Staubgehalt <1g/Nm³ gefordert, da aufgrund dieser Anordnung der Rauchgasentstickungs-Reaktor mit Staub belastet wird und nur verkürzte Standzeiten aufweist.

Aus DE 28 05 671 A1 und EP 0 177 667 A1 sind Einrichtungen zur Verbesserung der Strömungsumlenkung von Rauchgasen in einem Mehrzugkessel bekannt, bei denen im Bereich der Umlenkung des Vertikalzuges Leitbleche oder n-schaufelige Schaufelgitter angeordnet sind. Diese sind so ausgelegt, dass möglichst keine Ablösungen (weniger Druckverlust, weniger Staubablagerungen) entstehen. Gegenüber Dampferzeugern mit Vertikalzügen ohne derartige Leitbleche bzw. -gitter im Umlenkbereich stellen diese Lösungen bezüglich der Gasströmungen zwar eine Verbesserung dar, hinsichtlich einer effektiven Staubabscheidung sind sie aber völlig ungeeignet.

Aus EP 0 748 647 A1 sind ein Verfahren und eine Vorrichtung zur Reduktion des Staubgehaltes bei Dampferzeugern mit mindestens zwei vertikalen Zügen der oben beschriebenen Art bekannt. Das Verfahren ist dadurch gekennzeichnet, dass im Bereich der Gasumlenkung vom vertikalen Zug mit Abwärtsströmung zum vertikalen Zug mit Aufwärtsströmung durch Schaffung von strömungsberuhigten Zonen die Staubabscheidung an dieser Stelle verbessert wird und der Staub aus diesem Bereich direkt abgeführt wird. Die entsprechende Vorrichtung ist dadurch gekennzeichnet, dass in diesen Bereichen die Frontwand und/oder die Rückwand des Dampferzeugers doppelwandig ausgebildet ist, wobei sich zwischen den beiden Wänden die strömungsberuhigten Zonen befinden, in denen sich der Staub gut abscheidet. In einer Ausführungsvariante ist die Trennwand zwischen den vertikalen Zügen in ihrem unteren Bereich in Richtung des vertikalen Zuges mit Abwärtsströmung abgekröpft, so dass sich die Querschnittsfläche des Gaskanals in diesem Bereich verringert.

Eine solche Lösung hat jedoch den Nachteil, dass die zusätzlichen Einbauten (zweite innere Wand mit Schikanenblechen) verstopfungsgefährdet sind.

### Darstellung der Erfindung

Die Erfindung versucht, alle diese Nachteile zu vermeiden. Ihr liegt die Aufgabe zugrunde, einen Dampferzeuger mit integriertem Staubabscheider zu schaffen, wobei der Dampferzeuger mindestens zwei sich an den Brennraum anschliessende vertikale Gaszüge mit jeweils 180° Gasumlenkung aufweist, und bei dem ohne störende Einbauten in die Umlenkzone der vertikalen Gaszüge die Abscheidung des Staubes verbessert wird.

Erfindungsgemäss wird dies bei einem Dampferzeuger, welcher aus einer Brennkammer, einem Strahlungsteil und einem Konvektionsteil besteht und welcher mindestens zwei vertikale Gaszüge mit jeweils 180 ° Umlenkung für das Rauchgas aufweist, wobei die Brennkammer und der erste Gaszug mittels einer ersten Trennwand und die beiden Gaszüge mittels einer zweiten Trennwand voneinander getrennt sind, und wobei im Bereich der Umlenkung des Rauchgases vom vertikalen Zug mit Abwärtsströmung zum vertikalen Zug mit Aufwärtsströmung ein Trichter mit mindestens einer Öffnung für den Staubaustrag angeordnet ist, dadurch erreicht, dass die zweite Trennwand an ihrem unteren Ende derart ausgebildet ist, dass die Durchtrittsfläche für das Rauchgas vom vertikalen Zug mit Abwärtsströmung zum vertikalen Zug mit Aufwärtsströmung über die Breite einen veränderlichen Wert aufweist, wobei die Durchtrittsfläche in der Mitte kleiner ist als aussen.

Die Vorteile der Erfindung bestehen darin, dass die Abscheidung des Staubes aus dem staubbeladenen Rauchgas im Bereich der Strömungsumlenkung wesentlich verbessert wird. Es sind keine verstopfungsgefährdeten Einbauten vorhanden, sondern es wird die Strömung im Kessel zur Staubabscheidung benutzt, insbesondere unter Ausnutzung und Verstärkung ihrer dreidimensionalen Struktur, welche sich durch die Strömungsumlenkung um 180 ° ergibt. Durch Trägheits- und Auftriebskräfte wird eine Sekundärströmung entfacht, die zu einer Doppelspiralbewegung der Gase führt. Die Spiralbewegung greift auch auf die Staubpartikel über und kann zu deren Abscheidung genutzt werden, wenn sie entsprechend verstärkt wird.

Es ist zweckmässig, wenn zusätzlich die erste Trennwand an ihrem oberen Ende derart ausgebildet ist, dass die Durchtrittsfläche für das Rauchgas von der Brennkammer zum vertikalen Zug mit Abwärtsströmung über die Breite einen veränderlichen, also nicht konstanten Wert aufweist, wobei die Durchtrittsfläche in der Mitte grösser ist als aussen. Dadurch wird die Sekundärströmung zusätzlich verstärkt und die Staubabscheidung kann weiter verbessert werden.

Es ist von Vorteil, wenn der Dampferzeuger eine Trennwand zwischen dem Abwärtszug und dem Aufwärtszug (zweite Trennwand) aufweist, deren unteres Ende pflugscharförmig ausgebildet ist, wobei der Grat, d.h. die Kante der Seitenflächen, das untere Ende der Trennwand bildet und in den Gaskanal mit Abwärtsströmung hineinragt. Der Gaskanal wird somit in seinem Mittelteil verengt. Diese bevorzugte Ausführungsvariante bewirkt, dass einerseits die Strömung nach aussen zur Seitenwand des Gaszuges abgelenkt wird, andererseits wird die Drehrichtung der bei jeder schaffen Strömungsumlenkung generierten Gaswirbel verändert, denn die Gaswirbel strömen im Wandbereich abwärts, d.h. ihre Drehrichtung bei der Umlenkung vom Abwärtszug zum Aufwärtszug ist entgegengesetzt zur Drehrichtung, die sich ohne die erfindungsgemässe Lösung einstellen würde.

Vorteilhaft ist es auch, wenn das untere Ende der Trennwand nicht dreidimensional, sondern wie die restliche Trennwand eben ausgebildet ist, wobei das untere Ende V-förmig oder treppenförmig oder trapezförmig ist. Dann wird ebenfalls die Sekundärströmung verstärkt und durch den Sekundärwirbel die Staubabscheidung verbessert. Dieser Effekt wird noch verstärkt, wenn das untere Ende der Trennwand in Richtung des vertikalen Zuges mit Abwärtsströmung abgewinkelt ist.

Diese vorteilhaften Ausgestaltungen des unteren Endes der zweiten Trennwand sind auch für das obere Ende der ersten Trennwand von Vorteil. Eine Kombination dieser erfindungsgemäss ausgebildeten Trennwände führt dazu, dass die Sekundärströmung weiter verstärkt und die Staubabscheidung noch mehr verbessert wird.

Weiterhin ist es zweckmässig, wenn der vertikale Gaszug mit Abwärtsströmung in mindestens zwei, durch Seitenwände voneinander getrennte Kanäle unterteilt ist. Dadurch entstehen zwei oder mehr Kanäle mit je einer Doppelspirale, die mit den zusätzlichen Seitenwänden eine verbesserte Abscheidung der Staubpartikel bewirken.

Ausserdem ist es zweckmässig, wenn am tiefsten Punkt der Umlenkung mindestens zwei Austragsöffnungen für den Staub vorgesehen sind, die die dort befindlichen Doppelwirbel aufnehmen und stabilisieren. Die Wirbel bleiben in zwei Trichtern besser als in nur einem bestehen, weil dann die zur Abscheidung vorteilhafte Prallfläche grösser ist.

Schliesslich ist es vorteilhaft, wenn alle Kanäle bzw. alle an der Gasumlenkung beteiligten Teile im Naturumlaufsystem des Dampferzeugers integriert sind, und wenn Abreinigungseinrichtungen, vorzugsweise Klopfwerke auf den Seitenwänden, zur Entfernung des Staubes vorgesehen sind.

### Kurze Beschreibung der Zeichnung

In der Zeichnung sind mehrere Ausführungsbeispiele der Erfindung anhand eines Dampferzeugers mit zwei vertikalen Leerzügen und einem horizontalen Bündelzug, wie diese oft für Kehrichtverbrennungsanlagen eingesetzt werden, dargestellt.

### Es zeigen:

- Fig. 1: einen Teillängsschnitt eines erfindungsgemässen Dampferzeugers in einer ersten Ausführungsvariante;
- Fig. 2: eine perspektivische Ansicht der Trennwand in einer ersten Ausführungsvariante entlang der Linie II-II in Fig. 1;
- Fig. 3: eine perspektivische Ansicht der Trennwand in einer zweiten Ausführungsvariante entlang der Linie III-III in Fig. 1;
- Fig. 4: eine perspektivische Darstellung des Dampferzeugers nach dem bekannten Stand der Technik mit eingezeichnetem Strömungsverlauf;
- Fig. 5: eine perspektivische Darstellung des Dampferzeugers in der erfindungsgemässen Ausführungsvariante gemäss Fig. 1 mit eingezeichnetem Strömungsverlauf;
- Fig. 6: eine perspektivische Ansicht der Trennwand in einer dritten Ausführungsvanante:
- Fig. 7: einen Teillängsschnitt im Umlenkbereich zwischen Gaszug mit Abwärtsströmung und Gaszug mit Aufwärtsströmung in einer vierten Ausführungsvariante des erfindungsgemässen Dampferzeugers;
- Fig. 8: eine Ansicht entlang der Linie VIII-VIII in Fig. 7;
- Fig. 9: einen Teillängsschnitt im Umlenkbereich zwischen Gaszug mit Abwärtsströmung und Gaszug mit Aufwärtsströmung in einer fünften Ausführungsvariante des erfindungsgemässen Dampferzeugers;
- Fig. 10: eine Ansicht entlang der Linie X-X in Fig. 9;
- Fig. 11: eine perspektivische Darstellung des Dampferzeugers in einer sechsten Ausführungsvariante der Erfindung mit eingezeichnetem Verlauf der Sekundärströmung.

Es sind nur die für das Verständnis der Erfindung wesentlichen Elemente gezeigt. Nicht dargestellt sind von der Anlage beispielsweise der Verbrennungsrost und das Entschlackungssystem. Die Strömungsrichtung der Medien ist mit Pfeilen bezeichnet.

### Weg zur Ausführung der Erfindung

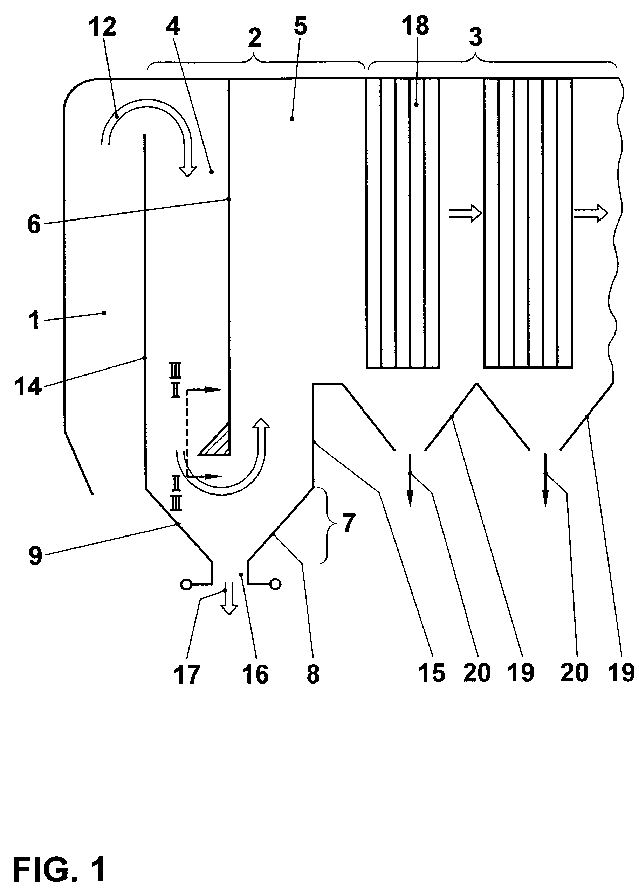

Nachfolgend wird die Erfindung anhand von mehreren Ausführungsbeispielen und der Fig. 1 bis 11 näher erläutert.

Fig. 1 zeigt einen Teillängsschnitt eines Dampferzeugers mit Naturumlaufsystem für eine Kehrrichtverbrennungsanlage. Der Kessel ist ein sogenannter Dackelkessel, der aus einer Brennkammer 1, einem Strahlungsteil 2 und einem Konvektionsteil 3 besteht. Der Strahlungsteil 2 besitzt einen ersten vertikalen Leerzug 4 und einen zweiten vertikalen Leerzug 5, wobei beide Züge 4, 5 durch eine im wesentlichen vertikale Trennwand 6 voneinander getrennt sind. Im Bereich der Gasumlenkung zwischen den beiden Leerzügen 4 und 5 verengen sich die Kesselwände 14, 15 trichterförmig. Der von ihnen gebildete Trichter 7 mit den Begrenzungswänden 8 und 9 hat an seinem unteren Ende eine Austragsöffnung 16 für die abgeschiedenen Staubpartikel 17. An den zweiten vertikalen Leerzug 5, d. h. den vertikalen Zug mit Aufwärtsströmung des Rauchgases 12, schliesst sich der Konvektionsteil 3 des Kessels an. Dieser besteht aus einem horizontalen Bündelzug 18. An der Unterseite des horizontalen Zuges 18 sind mehrere Trichter 19 angeordnet, aus denen weiterer dioxinhaltiger Flugstaub 20 ausgetragen wird. Soweit ist der beschriebene Kessel bekannter Stand der Technik.

Das aus der Brennkammer 1 kommende mit Staubpartikeln verschmutze Abgas 12 strömt zunächst nach oben, wird am Eintritt in den ersten vertikalen Leerzug 4 um 180 ° umgelenkt und gelangt über den Gaszug 4 abwärts, wird im Bereich des Trichters 7 erneut um 180 ° umgelenkt, strömt dann im zweiten vertikalen Leerzug 5 aufwärts und gelangt schliesslich in den horizontalen Bündelzug 18, bevor es dann in die hier nicht dargestellte, dem Kessel nachgeschaltete Gasreinigungsanlage strömt.

Die Erfindung kommt im Bereich der Gasumlenkung vom ersten vertikalen Leerzug 4 mit Abwärtsströmung zum zweiten vertikalen Leerzug 5 mit Aufwärtsströmung der Rauchgase 12 zum Tragen. Die Trennwand 6 zwischen den beiden Zügen 4 und 5 ist in ihrem unteren Bereich derart ausgebildet, dass die Durchtrittsfläche für das Rauchgas 12 vom vertikalen Zug 4 mit Abwärtsströmung zu vertikalen Zug 5 mit Aufwärtsströmung über die Breite einen veränderlichen, also nicht konstanten Wert aufweist, wobei die Durchtrittsfläche in der Mitte kleiner ist als aussen.

Das Abgas 12 aus der Brennkammer 1 der Kehrichtverbrennungsanlage weist relativ viel Staub 17 (ca. 2-5 g/Nm³) auf. Dieser hohe Staubanteil wird mit der beschriebenen Vorrichtung reduziert, wobei die Reduktion des Staubanteiles der Rauchgase 12 vor dem Eintritt der Rauchgase 12 in den konvektiven Teil 3 des Kessels und zwar im Bereich der Gasumlenkung vom vertikalen Leerzug 4 mit Abwärtsströmung zum vertikalen Leerzug 5 mit Aufwärtsströmung erfolgt. Der Staub 17, der sich in diesem Bereich abscheidet, wird über die Öffnung 16 abgeführt und mittels Quenchen oder Abkühlen unter Sauerstoffausschluss so abgekühlt, dass eine Dioxinbildung unterdrückt wird. Eine bevorzugte Ausführungsform besteht darin, dass die Staubpartikel am tiefsten Punkt der Umlenkung an mindestens zwei Punkten ausgetragen werden, weil dadurch die Abscheidungsbedingungen für die Staubpartikel weiter verbessert werden. Dieser dioxinfreie Staub 17 wird nicht mit dem dioxinhaltigen Flugstaub 20 aus den Trichtern 19 des Horizontalzuges 18 vermischt, so dass wesentlich weniger Umweltprobleme auftreten. Zur Unterstützung des Staubaustrages können nicht dargestellte Abreinigungseinrichtungen, vorzugsweise Klopfwerke, auf den Seitenwänden vorgesehen sein.

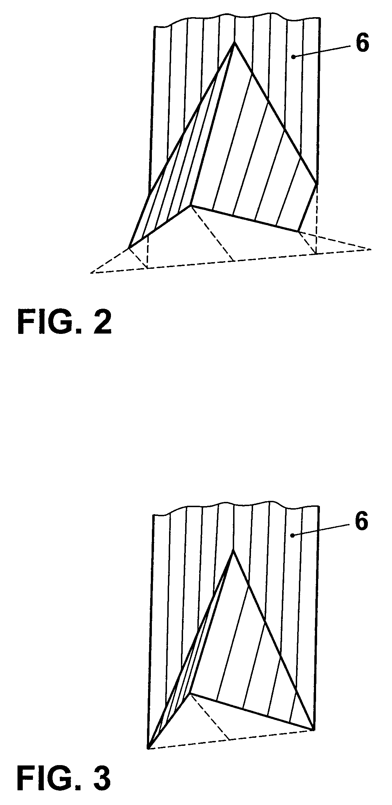

Bei den in den Fig. 1, 2 und 3 dargestellten Ausführungsbeispielen ist der untere Teil der Trennwand 6 pflugscharförmig ausgebildet, wie aus den Ansichten gemäss Fig. 2 und 3 zu erkennen ist. Der Grat der "Pflugschar" ist in Richtung der Gaskanalmitte des Abwärtszuges 4 ausgerichtet, so dass die Strömung nach aussen, d. h. zur Seitenwand 14 des Kessels hin, abgedrängt wird.

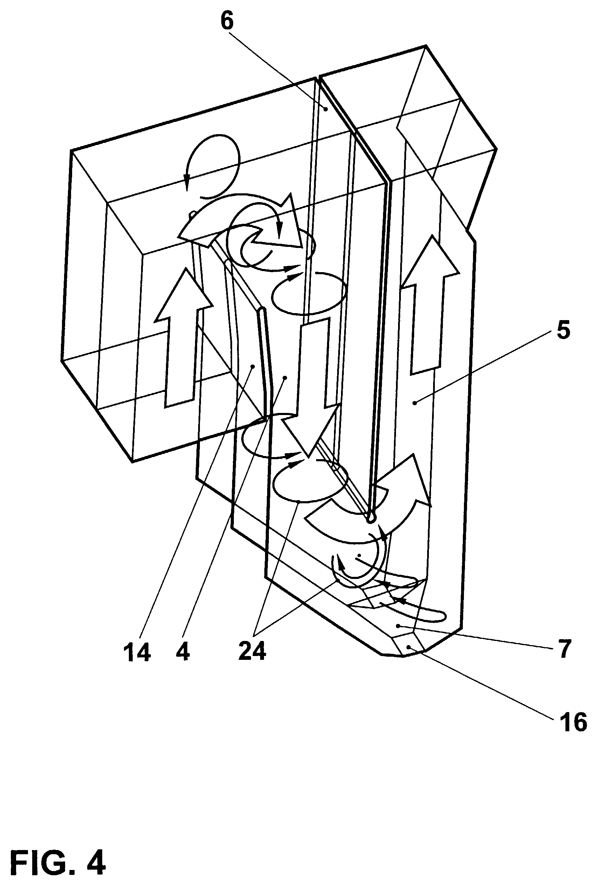

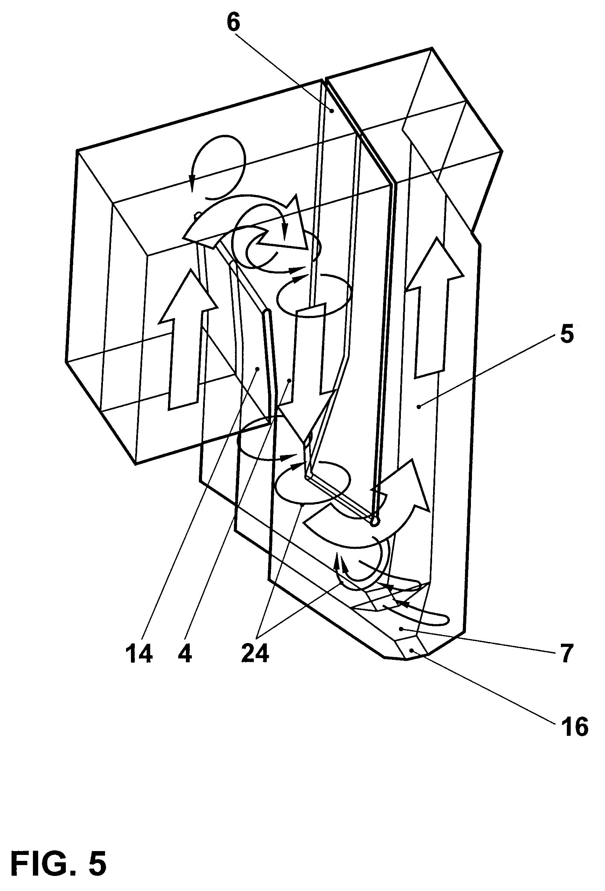

Durch die erfindungsgemässe Gestaltung des unteren Endes der Trennwand 6 wird die dreidimensionale Struktur der Gasströmung im Kessel verstärkt und zur Staubabscheidung genutzt. Das soll anhand der Fig. 4 und 5 verdeutlicht werden.

Fig. 4 zeigt eine perspektivische Darstellung des Dampferzeugers nach dem bekannten Stand der Technik mit eingezeichnetem Strömungsverlauf, während in Fig. 5 eine perspektivische Darstellung des Dampferzeugers in der erfindungsgemässen Ausführungsvariante gemäss Fig. 1 mit eingezeichnetem Strömungsverlauf dargestellt ist. Die dicken Pfeile symbolisieren jeweils die Hauptströmung der Rauchgase 12, die dünnen Pfeile die Sekundärströmung.

Durch Trägheits- und Auftriebskräfte wird bei der Umlenkung einer Gasströmung eine Sekundärströmung entfacht, die zu einer Doppelspiralbewegung der Gase führt. Es entstehen zwei gegenläufig drehende Gaswirbelzöpfe, wie sowohl in Fig. 4 als auch in Fig. 5 am Eintritt in den Kanal 4 zu erkennen ist. Diese Sekundärwirbel strömen nach unten. Die Spiralbewegung greift auch auf die Staubpartikel über. Bei der zweiten Gasumlenkung (vom Gaszug 4 in den Gaszug 5) werden wiederum Sekundärwirbel 24 induziert, die beim bekannten Stand der Technik gemäss Fig. 4 (ebene Trennwand, d. h. rechteckiger Kanalquerschnitt) nunmehr nach oben strömen (in Richtung der Hauptströmung) und die Staubteilchen wieder mitreissen, d. h. die Wirbel, die bei der ersten Umlenkung entstehen, werden bei der zweiten Umlenkung wieder weitgehend aufgehoben, da ihre Drehrichtung entgegengesetzt ist.

Demgegenüber wird mit der erfindungsgemässen Ausführung des unteren Teiles der Trennwand 6 (s. Fig. 5), bei der in diesem Bereich kein rechteckiger Gaskanalquerschnitt mehr vorhanden ist, sondern die lichte Weite des Kanales in der Mitte der Trennwand 6 am geringsten ist, erreicht, dass die bei der zweiten Umlenkung der Rauchgase 12 entstehenden Doppelspiralen (Sekundärwirbel 24) in die gleiche Richtung drehen wie die bei der ersten Umlenkung entstandenen Spiralen und diese verstärken. Die Doppelspiralen strömen also nach unten (entgegengesetzt zur Hauptströmungsrichtung) und können zur Abscheidung der Staubpartikel 17 genutzt werden, weil sie die Partikel ähnlich wie in einem Zyklon zu den Seitenwände und nach unten hin austragen. Die Staubpartikel, die in der Nähe der Seitenwände in den Aschetrichter 7 gelangen, werden in der Regel vollständig abgeschieden. Der Effekt der Abscheidung wird noch verstärkt, wenn mindestens zwei Trichter 7 vorhanden sind, weil dann die zur Staubabscheidung notwendigen Prallflächen grösser sind.

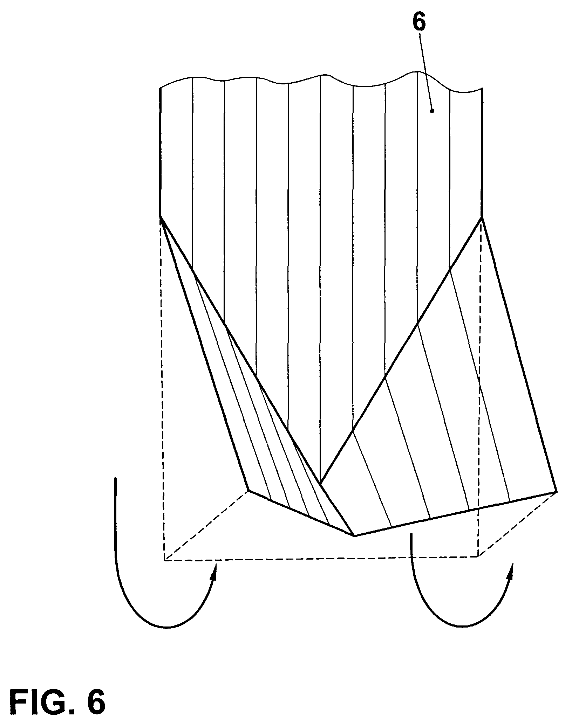

Fig. 6 zeigt eine perspektivische Ansicht des unteren Teiles der Trennwand 6 in einer weiteren Ausführungsvariante. Auch hier ist die Durchtrittsfläche für das Rauchgas 12 bei der Umlenkung vom Gaszug 4 mit Abwärtsströmung zum Gaszug 5 mit Aufwärtsströmung über die Breite der Trennwand 6 nicht konstant, sondern in der Mitte kleiner als in den Aussenbereichen. Es können die gleichen Effekte in Bezug auf die Sekundärströmung und Staubabscheidung erzielt werden wie bereits oben beschrieben.

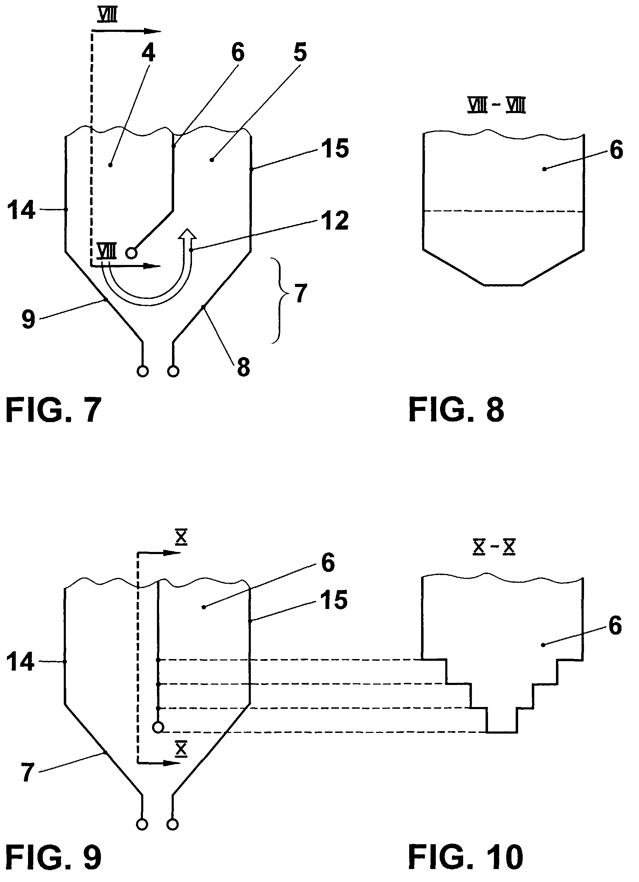

Fig. 7 zeigt einen Teillängsschnitt im Umlenkbereich zwischen Gaszug 4 mit Abwärtsströmung und Gaszug 5 mit Aufwärtsströmung in einer vierten Ausführungsvariante des erfindungsgemässen Dampferzeugers, während Fig. 8 eine Ansicht entlang der Linie VIII-VIII in Fig. 7 darstellt. Die Trennwand 6 ist in ihrem unteren Bereich in Richtung der Mitte des Gaszuges 4 hin abgekröpft, also in Richtung zur Seitenwand 14 abgewinkelt. Der unterste abgekröpfte Teil der Trennwand 6 ist trapezförmig ausgebildet, an ihn schliesst sich ein rechteckiger Teil der Trennwand 6 an, der ebenfalls noch abgekröpft ist. Mit dieser Form wird erreicht, dass der Gaskanal in der Mitte der Trennwand 6 verengt ist, während er an der Seite der Trennwand 6 nicht beeinträchtigt ist. Die Gasströmung wird an die Seitenwand 14 abgedrängt, die Sekundärströmung der Umlenkung wird verstärkt und wie oben beschrieben zur Staubabscheidung genutzt.

Anstelle einer trapezförmigen Ausführung des unteren Teils der Trennwand 6 kann diese in einem weiteren Ausführungsbeispiel auch V-förmig (nicht dargestellt) ausgebildet sein. Die V-Form kann, wie in der Ausführungsvariante gemäss Fig. 9 und 10 dargestellt, so modifiziert sein, dass das untere Ende der Trennwand 6 zwischen dem vertikalen Zug 4 mit Abwärtsströmung und dem vertikalen Zug 5 mit Aufwärtsströmung treppenförmig ausgebildet ist. Wie aus Fig. 9 und 10 zu entnehmen ist, ist hier das untere Ende der Trennwand 6 nicht abgewinkelt. Selbstverständlich kann es aber in einer anderen Ausführungsform ebenso wie in den vorangegangenen Beispielen abgekröpft sein, so dass dann die Wirkung auf die Sekundärströmung noch mehr verstärkt wird.

Wird der Gaskanal 4 zusätzlich in mindestens zwei Kanäle unterteilt, die durch Seitenwände voneinander getrennt sind, dann entstehen mindestens zwei Strömungen mit je einer Doppelspirale, so dass auch hierdurch die Abscheidung der Staubpartikel weiter verstärkt wird.

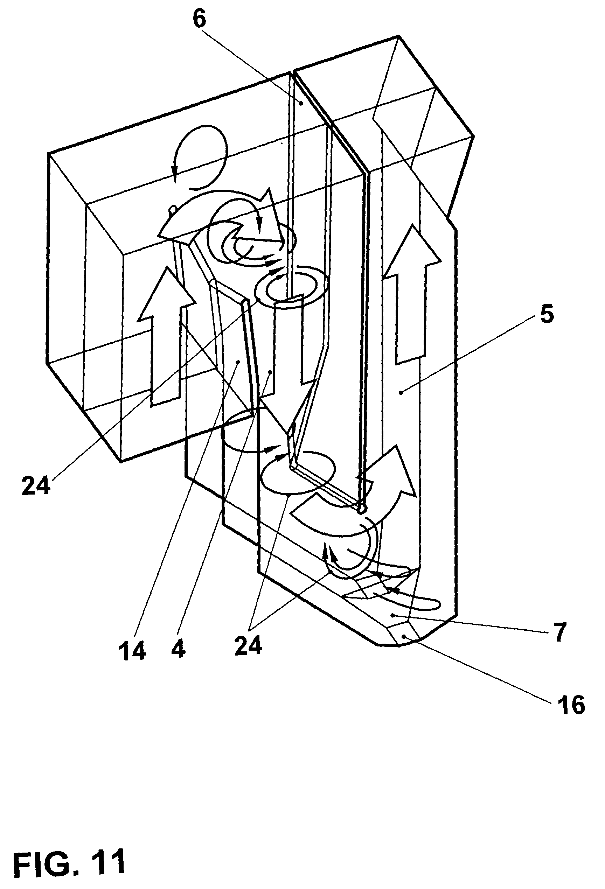

In Fig. 11 ist schliesslich eine Ausführungsvariante dargestellt, bei der neben der erfindungsgemässen Ausführung des unteren Teiles der zweiten Trennwand 6 zusätzlich der obere Teil der ersten Trennwand 14 derart ausgebildet ist, dass die Durchtrittsfläche für das Rauchgas 12 von der Brennkammer 1 zum vertikalen Zug 4 mit Abwärtsströmung über die Breite einen veränderlichen Wert aufweist, wobei die Durchtrittsfläche in der Mitte grösser ist als aussen. Das obere Ende der Trennwand 14 kann dabei z. B. V-förmig, treppen- oder trapezförmig sein. Durch die spezielle Gestaltung des oberen Endes der Trennwand 14 wird bereits in diesem Bereich die Sekundärströmung verstärkt, was sich in Kombination mit der erfindungsgemässen Gestaltung der zweiten Trennwand 6 besonders gut auf eine effiziente Staubabscheidung aus der Rauchgasströmung bei der Umlenkung der Rauchgase 12 auswirkt.

Alle Teile der vorgeschlagenen Umlenkung sind durch dasselbe Natutumlaufsystem gekühlt, welches auch für den gesamten Kessel verwendet wird. Ausserdem sind aus dem Stand der Technik bekannte Abreinigungseinrichtungen, vorzugsweise Klopfwerke, auf den Seitenwänden zur Entfernung des Staubes vorgesehen.

Selbstverständlich ist die Erfindung nicht auf die beschriebenen Ausführungsbeispiele beschränkt. Sie kann auf jede Art von staubführenden Kanälen, bei denen das staubbeladene Gas eine Strömungsumlenkung erfährt, angewendet werden.

### Bezugszeichenliste

- 1: Brennkammer
- 2: Strahlungsteil
- 3: Konvektionsteil
- 4: vertikaler Gaszug mit Abwärtsströmung von Pos. 12
- 5: vertikaler Gaszug mit Aufwärtsströmung von Pos. 12
- 6: Trennwand zwischen Pos. 4 und 5
- 7: Trichter
- 8: Begrenzungswand von Pos. 7 auf der Seite zu Pos. 5
- 9: Begrenzungswand von Pos. 7 auf der Seite zu Pos. 4
- 12: Rauchgas
- 14: Trennwand zwischen Pos. 1 und Pos. 4
- 15: vertikale Wand von Pos. 5
- 16: Austragsöffnung von Pos. 17
- 17: Staub
- 18: Bündelzug
- 19: Trichter
- 20: dioxinhaltiger Flugstaub
- 24: Sekundärwirbel

## Patentansprüche

1. Dampferzeuger, welcher aus einer Brennkammer (1), einem Strahlungsteil (2) und einem Konvektionsteil (3) besteht, und welcher mindestens zwei sich an die Brennkammer (1) anschliessende vertikale Gaszüge (4, 5) mit jeweils 180 ° Umlenkung für das Rauchgas (12) aufweist, wobei die Brennkammer (1) und der Gaszug (4) mittels einer ersten Trennwand (14) und die beiden Gaszüge (4, 5) mittels einer zweiten Trennwand (6) voneinander getrennt sind, und wobei im Bereich der Umlenkung des Rauchgases (12) vom vertikalen Zug (4) mit Abwärtsströmung zum vertikalen Zug (5) mit Aufwärtsströmung ein Trichter (7) mit mindestens einer Öffnung (16) für den Staubaustrag angeordnet ist, dadurch gekennzeichnet, dass die zweite Trennwand (6) an ihrem unteren Ende derart ausgebildet ist, dass die Durchtrittsfläche für das Rauchgas (12) vom vertikalen Zug (4) mit Abwärtsströmung zum vertikalen Zug (5) mit Aufwärtsströmung über die Breite einen veränderlichen Wert aufweist, wobei die Durchtrittsfläche in der Mitte kleiner ist als aussen.

2. Dampferzeuger nach Anspruch 1, dadurch gekennzeichnet, dass die erste Trennwand (14) an ihrem oberen Ende derart aus gebildet ist, dass die Durchtrittsfläche für das Rauchgas (12) von der Brennkammer (1) zum vertikalen Zug (4) mit Abwärtsströmung über die Breite einen veränderlichen Wert aufweist, wobei die Durchtrittsfläche in der Mitte grösser ist als aussen.

3. Dampferzeuger nach Anspruch 1 oder 2, dadurch gekennzeichnet, dass das untere Ende der zweiten Trennwand (6) und/oder das obere Ende der ersten Trennwand (14) pflugscharförmig ausgebildet ist.

4. Dampferzeuger nach Anspruch 1 oder 2, dadurch gekennzeichnet, dass das untere Ende der zweiten Trennwand (6) und/oder das obere Ende der ersten Trennwand (14) V-förmig ausgebildet ist.

5. Dampferzeuger nach Anspruch 1 oder 2, dadurch gekennzeichnet, dass das untere Ende der zweiten Trennwand (6) und/oder das obere Ende der ersten Trennwand (14) treppenförmig ausgebildet ist.

6. Dampferzeuger nach Anspruch 1 oder 2, dadurch gekennzeichnet, dass das untere Ende der zweiten Trennwand (6) und/oder das obere Ende der ersten Trennwand (14) trapezförmig ausgebildet ist.

7. Dampferzeuger nach einem der Ansprüche 1 bis 6, dadurch gekennzeichnet, dass das untere Ende der zweiten Trennwand (6) und/oder das obere ersten Ende der Trennwand (14) in Richtung des vertikalen Zuges (4) mit Abwärtsströmung abgewinkelt ist.

8. Dampferzeuger nach einem der Ansprüche 1 bis 7, dadurch gekennzeichnet, dass der vertikale Gaszug (4) mit Abwärtsströmung in mindestens zwei, durch Seitenwände voneinander getrennte Kanäle unterteilt ist.

9. Dampferzeuger nach einem der Ansprüche 1 bis 8, dadurch gekennzeichnet, dass am tiefsten Punkt der Umlenkung mindestens zwei Austragsöffnungen (16) für den Staub (17) vorgesehen sind.

10. Dampferzeuger nach einem der Ansprüche 1 bis 9, dadurch gekennzeichnet, dass alle an der Gasumlenkung beteiligten Teile im Naturumlaufsystem des Dampferzeugers integriert sind, und dass Abreinigungseinrichtungen, vorzugsweise Klopfwerke, auf den Seitenwänden zur Entfernung des Staubes vorgesehen sind.
